# EUROPEAN PATENT APPLICATION

(11) **EP 4 287 039 A1**
(43) Date of publication of application: **06.12.2023**
(21) Application number: 22176470.7
(22) Date of filing: 31.05.2022
(51) Int. Cl.: G06F 16/635

(54) **SYSTEM AND METHOD FOR CONTENT-BASED MUSIC PROJECT RECOMMENDATION**

(71) Applicant: Sparwk AS, 7010 Trondheim (NO)
(72) Inventor: Suk Choi, Jin, 10390 Goyang, Gyeonggi (KR); Jenssen, Robin, 111 37 Stockholm (SE); Liang, Beici, 7014 Trondheim (NO)
(74) Representative: Onsagers AS

(57) **Abstract**

A method and system for providing content-based recommendation of music projects, selected from registered music projects, to be recommended to a music creator, where the registered music projects comprise requests on creator profiles that are stored and made available in a project filter module 205, requests on musical attributes, and reference music contents that are stored and made available in a project retrieval module 230, the method is executed in a music project recommendation system 110 running on a computing device 100 where input data characterising musical works of a music creator are received via an input interface module 200 on a computing device 100. A list of projects is derived according to the creator profile, and the corresponding request on musical attributes and reference music content in the list are derived. Tag feature vectors of tags of musical attributes and content feature vectors of the musical works provided by the music creator and of the requests provided by the music projects in the sorted list are generated. A list of project candidate is derived by comparing distances between the generated vectors and are sorted according to degree of similarity between the feature vectors. The result is presented on a user interface 120.

## Description

### TECHNICAL FIELD

The present disclosure relates to a system and method for processing of music related content by neural networks, and more specifically to recommending music projects matching a music creator whose profile and musical works can contribute to the project.

### BACKGROUND

Music creators, such as music producers, composers, lyricists, musicians, engineers and so on, are actively searching for music projects to unleash their musical ideas and support their livelihood. A music project is commonly initiated by music publishers, record labels, synchronization agencies and other music industry professionals to specify their requests on music creators and/or musical works. Accordingly, music creators can collaboratively deliver new musical works with other music creators involved in the same music project, and/or pitch their existing musical works to a music project.

In reality, music projects rely on human reporting and reviewing to reach out potential music creators and musical works that fit the projects. This has repercussions for independent and rising music creators who have limited networks to connect themselves and their musical works with relevant music projects. Moreover, manual recommendation can be time consuming, and error prone due to the subjectivity of personal aesthetics. A more objective system is needed to automate and optimize the process of music project recommendation, hence benefits creator remuneration.

Existing recommendation systems employed by music services are commonly designed for music consumption purposes. Streaming services' recommendation systems can approximate user preferences through a machine learning paradigm based on big data derived from signals such as a user's previous listening patterns, manual searches, and the listening patterns of other users. In other words, streaming services use machine learning to recommend personalised playlists as described in for instance US 11086936 B2, artists as described in US 11210355 B2, and the like by continually learning about a user's preferences from their streaming history, which is gathered and used continuously by the system. This approach is known as collaborative filters.

However, systems based on collaborative filters suffer from the "cold start" problem, i.e. a new item cannot be recommended until it has been consumed, and it is less likely to be consumed if it is never recommended. In the case of this disclosure, a music project is usually newly created without interaction history with music creators and musical works. Collaborative filter-based methods cannot be applied to music project recommendation.

Content based recommendation systems have been developed to address the cold-start problem. This is described in Van den Oord, Aaron, et al. "Deep content-based music recommendation", Advances in neural information processing systems 26 (2013) and Liang, Beici, et al. "Learning audio embeddings with user listening data for content-based music recommendation", International Conference on Acoustics, Speech and Signal Processing (ICASSP). IEEE, 2021. Such recommendation systems operate on music feature vectors that are extracted automatically from the music content. While this approach naturally extends to any item regardless of popularity, the construction of feature vectors in these systems are not designed and optimised for music project recommendation.

The example embodiments described herein address the foregoing difficulties by providing a content-based method and system for music project recommendation by computing distances for a plurality of music projects. Each distance quantifies the matching degree of a music project to one of a plurality of music creators and their musical works.

### SHORT DESCRIPTION

The invention is defined by a method providing content-based recommendation of music projects, selected from registered music projects, to be recommended to a music creator, where the registered music projects comprise requests on creator profiles that are stored and made available in a project filter module, requests on musical attributes, and reference music contents that are stored and made available in a project retrieval module, the method is executed in a music project recommendation system running on a computing device. The method comprises:
- receiving, via a user interface module, input data of a music creator comprising profile information, and musical works including the corresponding metadata, text-based tags of musical attributes and music contents;
- deriving, in a project filter module, a list of projects according to the creator profile;
- deriving, in a project retrieval module, the corresponding requests on musical attributes, and reference music contents from the music projects included in the filtered list;
- generating, in a tag neural network module, tag feature vectors of the tags of musical attributes of the musical works provided by the music creator and of the requests provided by the music projects included in the filtered list;
- generating, in a content neural network module, content feature vectors of the music contents of the musical works provided by the music creator and of the references provided by the music projects included in the filtered list;
- comparing, in a project candidate generation module, the generated tag feature vectors of the tags of musical attributes of the musical works provided by the music creator to the generated tag feature vectors of the requested tags of musical attributes of the music projects included in the filtered list;
- deriving a list of project candidates by sorting the compared tag feature vectors according to degree of similarity between tag feature vectors;
- comparing, in a distance module, the generated content feature vectors of the music contents of the musical works provided by the music creator to the generated content feature vectors of the reference music contents of the music projects included in the project candidates;
- deriving a list of sorted project candidates according to determined distances, over the content vector space, of the content feature vectors of the reference music contents of the music projects in the list of projects candidates, and,
- presenting, on the user interface, a final recommendation list of music projects, consisting of a plurality of music projects included in the list of sorted project candidates, to be recommended to the input music creator.

The above listed steps are not necessarily performed in the order listed. Content feature vectors may for instance be generated prior to the tag feature vectors, or they can be generated at the same time, i.e. by parallel processing.

In one embodiment of the invention, the user interface module is implemented to generate and display a user interface on the computing device. The user interface module may comprise a touch screen displaying different text-based tags of musical attributes that can be activated to input corresponding input data to the computing device. Input data can also be provided by other known means such as via a point-and-click device, keyboard, or speech.

In one embodiment, the text-based tags of musical attributes are user-generated, e.g. input via a touch screen. In another embodiment, the tags are computer generated by executing an algorithm analysing musical work.

According to one embodiment, the tag neural network module is adapted to concatenate multiple text feature vectors, each defining different characterising aspects of musical attributes, to a single tag feature vector representing all characteristics.

According to another embodiment, the content neural network module is adapted to concatenate multiple audio feature vectors, each defining different characterising aspects of the audio, to a single audio feature vector representing all characteristics.

According to one embodiment, the content neural network module is adapted to generate a single lyrics feature vector representing semantic meanings of a lyrics document.

According to one embodiment, a selection of information characterising the final recommendation list of music projects to display on the computing device is determined.

The present invention is further defined by a music project recommendation system providing content-based recommendation of music projects, selected from registered music projects, to be recommended to a music creator, where the registered music projects comprise requests on creator profiles that are stored and made available in a project filter module, requests on musical attributes and reference music contents that are stored and made available in a project retrieval module.

The system comprises a computing device adapted for performing the content-based recommendation when executing a music project recommendation program. The system further comprises:
- a user interface module receiving input data of a music creator comprising profile information, and musical works including the corresponding metadata, text-based tags of musical attributes and music contents;
- a tag neural network module generating tag feature vectors of the tags of musical attributes of the musical works provided by the music creator and of the requests provided by the registered music projects;
- a content neural network module generating content feature vectors of the music contents of the musical works provided by the music creator and of the references provided by the registered music projects;
- a project filter module deriving a list of projects according to the creator profile;
- a project retrieval module deriving the corresponding requests on musical attributes, and reference music contents from the music projects included in the filtered list;
- a project candidate generation module comparing the generated tag feature vectors of the tags of musical attributes of the musical works provided by the music creator to the generated tag feature vectors of the requested tags of musical attributes of the music projects included in the filtered list, and deriving a list of project candidates by sorting the compared tag features vectors according to degree of similarity between tag feature vectors;
- a distance module comparing the generated content feature vectors of the music contents of the musical works provided by the music creator to the generated content feature vectors of the reference music contents of the music projects included in the project candidates, and deriving a list of sorted project candidates according to determined distances, over the content vector space, of the content feature vectors of the reference music contents of the music projects in the list of projects candidates, and,
- a user interface, presenting a final recommendation list of music projects consisting of a plurality of music projects included in the list of sorted project candidates to be recommended to the input music creator.

### DETAILED DESCRIPTION

The present invention will now be described by examples and with reference to the accompanying figures illustrating an embodiment of the invention. These figures are provided to facilitate the understanding of the disclosed technology and shall not be considered limiting of the breadth, scope, or applicability thereof.
Figures 1a - 1b illustrate a digital medium environment in an example implementation that is operable to employ techniques described herein.
Figure 2 illustrates an example system for recommending a music project that calls for music creators to a music creator in accordance with one or more aspects of the disclosure.
Figure 3 illustrates an example system for recommending a music project that calls for musical works to a music creator's available musical work in accordance with one or more aspects of the disclosure.
Figure 4 illustrates a flow diagram depicting an example procedure in accordance with the music project recommendation to a music creator who is a composer.
Figure 5 illustrates a flow diagram depicting an example procedure in accordance with the music project recommendation to a musical work created by a composer.

The following terms are used throughout the disclosure. The descriptions of these terms are by way of example, and not limitation.

Music project - describes a collection of requests proposed by the project creators, such as music publishers, record labels, and the like, who look for music creators of different roles that match the requests for collaboration. A music project can include creator requests, musical attributes of the proposed musical work to be collaborated on, and reference music content.

Music creator - is a catch-all term referring to composers, lyricists, performers, producers, and other roles involved in the music creation process.

Musical work - describes the underlying music composition and production, comprising melody, lyrics, and other music content created by music creators. During the registration of a musical work, corresponding metadata, musical attributes, audio recordings, and other music related information are stored.

Reference music content - describes one or more music related contents provided by a project creator. The contents, such as audio files, lyrics documents, and the like, can be loaded into a music creator recommendation system in order to search for creators whose featured musical works are perceptually similar to the reference music content.

Metadata - for music is a collection of information that pertains to a music entity. Metadata can include descriptive information, which details the contents of a track, such as the title, album, track number, and so on. Metadata can also include ownership information, which details the creators, their corporate partners, the contractual terms agreed by them, and so on.

Musical attribute - describes any suitable characteristic of music that can be used to classify a music entity such as a music project, a musical work, and a music file. Examples of musical attribute include genre (e.g., rock, jazz, etc.), mood (e.g., happy, sad, etc.), tonality (e.g., key, scale, etc.), rhythm (e.g., tempos in beat per minute, or levels of perceived tempos such as slow, medium, fast, etc.), vocal (e.g., female, male, etc.), instrument (e.g., piano, guitar, etc.), and the like.

Tag feature vector - describes a vector generated from text-based tags of musical attributes to represent semantic meanings of text information. A tag feature vector can be generated with a word-based neural network that processes tags of an aspect of musical attributes (such as tags related to genres) and generates the tag feature vector in a vector space.

Lyrics feature vector - describes a vector generated from text-based lyrics of musical works to represent semantic meanings of text information. A lyrics feature vector can be generated with a document-based neural network that processes the lyrics of a musical work, and generates the lyrics feature vector in a vector space. Audio feature vector - describes a vector generated from a music file that represents low-level characteristics of music content. An audio feature vector can be generated with an audio-based neural network that processes a time sequence of a music file, such as a waveform, or a two-dimensional representation of the music file, such as a spectrogram, and generates the audio feature vector in a vector space.

Vector space - describes a space in which vectors of real-valued numbers, such as audio feature vectors of audio files, belong. A vector of a vector space can be added to another vector in the vector space, and the result belongs to the vector space. A vector of a vector space can also be multiplied by a real-valued scalar, and the result belongs to the vector space. The vector space can include any suitable number of dimensions.

Distance - describes a norm of a difference between feature vectors. It indicates a matching degree between music projects and music creators represented by the feature vectors.

Distance similarity threshold - describes a threshold that can be used to determine if a music creator matches the requests of a music project.

The present invention describes systems, devices, and techniques for recommending music projects to music creators and their musical works. As discussed above, music creators who rely on their limited networks can hardly reach out relevant music projects for collaboration or music pitching. Platforms that provide music recommendation services are not adapted to recommend music projects. The embodiments described herein provides a process of recommending a music project to a music creator based on objective measurements of how the music project matches the creator's profile and musical works.

The following non-limiting example is provided to introduce a certain embodiment of the invention. In this example, a music project recommendation system can access the profile and musical works of a music creator, and configurations of a music project. The music project recommendation system can provide a user interface to the music creators for profile registration, which can store their personal information, e.g., role, location, language, years of experience, availability, accolades, etc., upload music contents of their musical works, e.g., audio recordings, lyrics documents, etc., and according to the musical works, store the corresponding metadata, tags of musical attributes and other related information. The tags of musical attributes can be user-generated, i.e. specified by a music creator, or algorithmically generated, such as tags that are generated by a content analysis algorithm, such as a tempo estimation algorithm, a genre classifier, and the like. Musical works can be featured works that best present the music creator's ability, and/or unreleased works available to be pitched to potential music projects. The music project recommendation system can also provide a user interface to the music industry professionals for creating a music project with specific requests, such as a call for creator collaborations or call for musical works.

If the project is created as a call for creator collaborations, the user interface can present collaboration requests on music creators, e.g., role, location, language, years of experience, availability, accolades, etc., musical attributes that should be obtained by the musical works to be collaborated on, e.g., genre, instrument, etc., and provides music contents as references, e.g., audio recordings, lyrics documents, etc., which the final delivered musical works should be perceptually similar to.

If the project is created as a call for musical works, the user interface can present musical attributes that should be obtained by the musical works to be pitched to the project, and provide music contents as references, which the pitched musical works should be perceptually similar to.

To recommend music projects that call for creator collaborations, the music project recommendation system in this example uses three stages of candidate generation to decide the final list of music projects to be recommended to a given music creator.

In the first stage, personal information registered in the music creator profile is used to filter a list of projects for recommendation from a large collection of music projects. The filtered list consists of music projects which obtain creator requests on roles, locations, languages, years of experience, availability, accolades, and the like that are fulfilled by the personal information of the given music creator. Corresponding musical attributes and reference music contents of the music projects included in the filtered list are obtained for the following two stages of candidate generation.

In the second stage, musical attributes of a featured musical work presented in the music creator profile are used to generate project candidates from the music projects obtained in the first stage. Project candidates consist of music projects that request musical attributes similar to the ones presented in the music creator profile. To quantify this similarity, trained word-based neural networks are used to represent tags of musical attributes into tag feature vectors. The music project recommendation system provides tags of musical attributes corresponding to a featured musical work presented in the music creator profile to the word-based neural networks to obtain the tag feature vectors, which are compared to the tag feature vectors corresponding to the tags of musical attributes requested by the music projects included in the filtered list in the first stage. The music project recommendation system can determine the distance between the tag feature vectors of musical attributes, and return the project candidates consisting of the music projects that correspond to the smallest distances, such as the top-ten music projects having the ten smallest distances. Additionally, or alternatively, the music project recommendation system can return the project candidates consisting of the music projects corresponding to respective distances that are less than a distance similarity threshold. The threshold is a float number which ranges from zero to one. The threshold value can be pre-set by the music project recommendation system, and/or adjusted via the user interface. Distance between tag feature vectors of different music projects is determined by estimating the difference in numerical representations of similar musical attributes of the tag feature vectors.

In this example, the word-based neural networks were trained with a large corpus of text especially in the musical context to learn word associations. Tags of musical attributes can be represented as respective tag feature vectors. Distances between the tag feature vectors indicate the semantic similarity between the tags represented by these vectors. Therefore, tag feature vectors can handle plural forms (guitar and guitars), synonyms (happy and cheerful), acronyms (edm and electronic dance music), dialectal forms (brazil and brasil), and the like in tags of musical attributes.

In the third stage, the music project recommendation system determines the final list of music projects from the project candidates by using trained music content based neural networks. In one example, where the music content of the featured musical work presented in the music creator profile is an audio recording, audio-based neural networks are used. The music project recommendation system provides the audio recording of the featured musical work presented in the music creator profile to the audio-based neural networks to obtain the audio feature vectors, which are compared to the audio feature vectors corresponding to audio recordings of the reference music contents provided in the music projects included in the project candidates. The music project recommendation system can determine the distance between the audio feature vectors of audio recordings to return sorted project candidates. According to the number of music projects to be recommended to a music creator, for instance five, the top-five music projects whose reference music contents have the five smallest distance in the sorted project candidates form the final recommendation list of music projects for the given music creator.

In the above example, the audio-based neural networks were trained to analysis the subjective information, e.g., genre, mood, etc., objective information, e.g., vocal, instrument, etc., and harmonic progression from audio recordings of music contents, and represent these aspects as respective audio feature vectors. Distances between the audio feature vectors indicate the perceptually similarity between the music represented by these vectors. The audio feature vectors provide a music representation of higher specificity than the tag feature vectors, therefore are used to narrow down the music projects to be recommended from the candidates which are generated from the previous stages.

In one example, where the music content of the featured musical work presented in the music creator profile is a lyrics document, document-based neural networks are used to determine the final recommendation list of music projects in the third stage. The document-based neural networks were trained with a large corpus of lyrics documents to learn document associations. Documents of lyrics can be represented as respective lyrics feature vectors. Distances between the lyrics feature vectors indicate the semantic similarity between the documents represented by these vectors. The music project recommendation system provides the lyrics document of the featured musical work presented in the music creator profile to the document-based neural networks to obtain the lyrics feature vectors, which are compared to the lyrics feature vectors corresponding to the lyrics documents of the reference music contents provided in the music projects included in the project candidates. The music project recommendation system can determine the distance between the lyrics feature vectors of lyrics documents to return sorted project candidates. According to the number of music projects to be recommended to a music creator, for instance five, the top-five music projects whose reference music contents have the five smallest distance in the sorted project candidates form the final recommendation list of music projects for the given music creator.

To recommend music projects that call for musical works, the music project recommendation system in this example uses two stages of candidate generation to decide the final list of music projects to be recommended to a given musical work. The trained neural networks mentioned above are used for candidate generation.

In the first stage, musical attributes of an available musical work presented in the music creator profile are used to generate project candidates from a large collection of music projects. Project candidates consist of music projects that request musical attributes similar to the ones presented in the music creator profile.

In the second stage, of recommending music projects that call for creator collaborations, the music project recommendation system uses the word-based neural networks to generate the tag feature vectors, which can be used to quantify the similarity between tags of musical attributes by comparing the distance between these vectors. From the project candidates, the music project recommendation system can return sorted project candidates using trained music content based neural networks in order to determine the final recommendation list of music projects that call for musical works in the second stage, which can be referred to the third stage of recommending music projects that call for creator collaborations. The top-1 music project in the final recommendation list should obtain the smallest distance between the content feature vector corresponding to the content of the available musical work presented in the music creator profile and the content feature vector corresponding to the reference music content of the top-1 music project.

In the following discussion, an example digital medium environment is described that may employ the techniques described herein. Example implementation details and procedures are then described which may be performed in the example digital medium environment as well as in hardware environments, firmware, software, or a combination thereof.

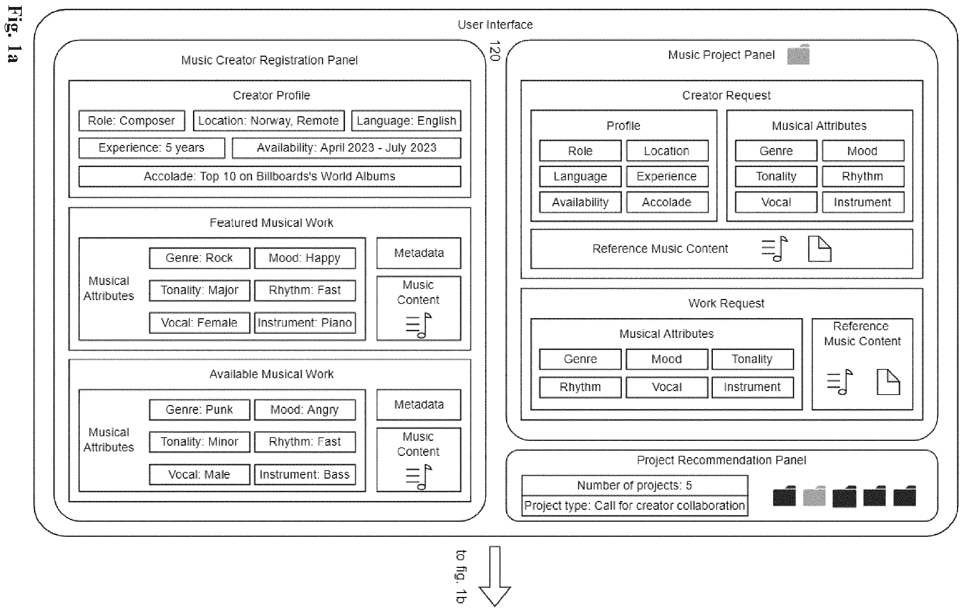

Figures 1a - 1b illustrate a digital medium environment in an example implementation that is operable to employ techniques described herein. As used herein, the term "digital medium environment" refers to the various computing devices and resources that can be utilised to implement the techniques described herein. The illustrated digital medium environment includes a computing device 100 depicted as a desktop computer, which is an example computing device 100. The computing device 100 can generally include any suitable type of computing device 100 with memory and processor resources. The computing device 100 includes a music project recommendation system. The music project recommendation system 110 can generate a user interface 120 that is displayable on a display device of the computing device 100.

The user interface 120 includes a music creator registration panel for registering a new profile of music creator. Music projects will be recommended according to the information registered in the music creator profile. The music creator registration panel includes a profile panel for logging and displaying personal information about the music creator, such as role, location, language, experience, availability, accolade, and the like. In the example in Figures 1a - 1b, the music creator has registered in the profile panel with the personal information, including role as composer, location as Norway or remote, language as English, experience as 5 years, availability from April to July 2023, and accolade as top 100 on billboard's world albums. The music creator registration panel also includes a featured musical work panel for registering one or more released musical works that best present the ability of the music creator. The featured musical work panel includes a metadata panel for logging and displaying general ownership metadata and descriptive metadata of the featured musical work, and a music content panel for uploading and displaying the corresponding music content of the featured musical work. The featured musical work panel also includes a musical attributes panel for describing different aspects of musical attributes of the featured musical work. The musical attributes panel can display tags of musical attributes that are user-generated, or algorithmically generated by content analysis algorithms. In the example in Figures 1a - 1b, a featured musical work has been registered with the metadata, one audio recording as the music content, and six aspects of musical attributes, including genre as rock, mood as happy, tonality as major, rhythm as fast, vocal as female, and instrument as bass. The information registered for the featured musical work can be used to recommend music projects that call for creator collaborations. The music creator registration panel also includes an available musical work panel for registering one or more available musical works that are ready to be pitched to potential music projects that call for musical works. The available musical work panel is similar to the featured musical work panel. Accordingly, it includes a metadata panel, a music content panel, and a music attributes panel for registering corresponding information of the available musical work.

The user interface also includes a music project panel for configuring requests that call for creator collaborations or musical works. Therefore, the music project panel includes a creator request panel and a work request panel. The creator request panel includes a profile panel to configure and display the basic requirements which should be fulfilled by the music creators to collaborate on this project. In the example in Figures 1a - 1b, the profile panel presents six requirements including role, location, language, experience, availability and accolade. The creator request panel also includes a musical attributes panel for configuring and displaying different aspects of musical attributes to be obtained by the musical works delivered from this project. Further, in the example in Figures 1a - 1b, the musical attributes panel presents requests on six aspects of musical attributes, including genre, mood, tonality, rhythm, vocal and instrument. The creator request panel also includes a reference music content panel, which can load one or more examples of music related contents into the music project recommendation system 110 as references. The user interface can display any suitable representation of the reference music content, such as a waveform of an audio recording, texts of a lyrics document, and the like. The work request panel is similar to the creator request panel. It includes a musical attributes panel for configuring and displaying different aspects of musical attributes that should be obtained by the musical works pitched to this project. It also includes a reference music content panel, which can be identical to the one included in the creator request panel.

Based on the information registered in the music creator profile, the user interface can display a project recommendation panel for presenting music projects, to which the registered creator can contribute or pitch the available musical work. The project recommendation panel can instruct the music project recommendation system 110 to return a specific number of music projects and their types, e.g., call for creator collaborations or musical works. In the example in Figures 1a - 1b, since a user has instructed the music project recommendation system 110 to return a list of five music projects that call for creator collaborations, the project recommendation panel displays representations of five music projects, including the newly configured music project as the second one. A user can select any of these music projects, view the requests included in the projects, and play the audio recording of the project's reference music content through a loudspeaker of the computing device 100.

The music project recommendation system 110 includes a display, which can expose any suitable data used by or associated with the music project recommendation system 110. For example, the display can display the user interface mentioned above. The music project recommendation system 110 also includes processors, which can include any suitable type of processor. The music project recommendation system 110 can be implemented by executing the instructions stored in storage on the processors. The storage can be any suitable type of storage accessible by or included in the music project recommendation system 110. The music project recommendation system 110 also includes transceivers, which can be implemented to transmit and receive data using any suitable type and number of communication protocols.

The music project recommendation system 110 also includes the music project recommendation application that represents functionality configured to recommend music projects to music creators based on creators' profiles and musical works. The music project recommendation application can be implemented as any type of module or component in any type of computing device 100. The music project recommendation application can include or have access to any suitable data for music project recommendation, including music project data, music creator data, recommendation data, user interface data, neural network data, e.g., architecture definitions of a neural network, activation functions, and the like, and feature vector data, e.g., tag feature vector of a musical attribute, lyrics feature vector of a lyrics document, audio feature vector of the harmonic progression in a music file, and the like.

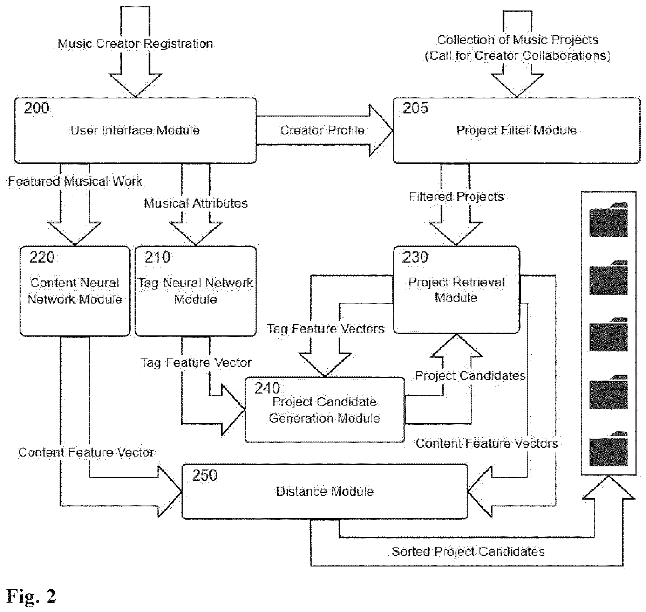

Figure 2 illustrates an example of a music project recommendation system for recommending a list of music projects from a collection of projects that call for creator collaborations to a given music creator in accordance with one or more aspects of the disclosure. In this implementation, the system includes user interface module 200, project filter module 205, tag neural network module 210, content neural network module 220, project retrieval module 230, project candidate generation module 240, and distance module 250. These modules can be implemented as any type of module or component in any type of computing device. The system here is one example of the music project recommendation system in Figures 1a - 1b that can be constructed using these modules.

The user interface module 200 can be implemented to generate and display a user interface. The user interface in Figures 1a - 1b is an example of a user interface generated by the user interface module 200. The user interface module 200 can receive and display information registered by music creators via the user interface, including profile information, featured musical works, and corresponding tags of musical attributes.

The project filter module 205 can be implemented to filter a list of music projects from a collection of music projects that call for creator collaborations, which have been configured and stored in the music project recommendation system. This list is formed according to the creator profile from the user interface module 200. Therefore, the filtered projects consist of music projects in which the basic requirements on creators can be fulfilled by the given creator profile on roles, locations, languages, and the like. The project filter module 205 can provide the filtered list of music projects to the project retrieval module 230.

The tag neural network module 210 can be implemented to generate a tag feature vector for the text-based tags of musical attributes. The tag neural network module 210 can include a trained word-based neural network to generate feature vectors. In one example, the tag neural network module 210 generates a tag feature vector by concatenating multiple feature vectors of different aspects of musical attributes. For example, six feature vectors can be respectively obtained from the trained word-based neural network for six aspects of musical attributes including genre, mood, tonality, rhythm, vocal, and instrument. They are then concatenated into one vector as the tag feature vector. The tag neural network module 210 can provide the tag feature vector corresponding to the tags of musical attributes of a music creator's featured musical work to the project candidate generation module 240.

The content neural network module 220 can be implemented to generate a content feature vector for music related content, such as audio recordings and lyrics documents. The content neural network module 220 can include trained audio-based neural networks to generate audio feature vectors, and/or trained document-based neural networks to generate lyrics feature vectors. In one example, the content neural network module 220 generates an audio feature vector of one audio recording by concatenating multiple feature vectors of different aspects of music. For example, three feature vectors can be respectively obtained from three trained audio-based neural networks for objective information, subjective information, and harmonic progression. They are then concatenated into one vector as the audio feature vector. In another example, the content neural network module 220 generates a lyrics feature vector of one lyrics document. The content neural network module 220 can provide the audio feature vector and/or the lyrics feature vector corresponding to the featured musical work given in the music creator registration to the distance module 250.

According to the filtered list of music projects provided by the project filter module 205, the project retrieval module 230 can retrieve their corresponding tags of musical attributes and reference music contents to obtain the respective tag feature vectors and content feature vectors from the database, which represent the semantic meanings of tags of musical attributes and reference music contents, respectively. Additionally or alternatively, the musical work retrieval module can obtain these feature vectors by providing the corresponding tags of musical attributes to the tag neural networks module, and the corresponding reference music contents to the content neural network module 220, which can then generate tag and content feature vectors that belong to the filtered list of music projects. The project retrieval module 230 can provide the tag feature vectors to the project candidate generation module 240, and the content feature vectors to the distance module 250.

The project candidate generation module 240 can be implemented to determine distances between tag feature vectors, such as distances between the tag feature vector for the tags of musical attributes of a music creator's featured musical work, and tag feature vectors for the tags of musical attributes requested in the filtered projects. Hence the project candidate generation module 240 can receive the tag feature vector for the musical attributes of the given music creator's featured musical work from the tag neural network module, and the tag feature vectors for the filtered projects from the project retrieval module 230. The project candidate generation can determine the distances over the tag vector space and indicate a list of project candidates, consisting of the music projects that request musical attributes similar to the ones presented in the given music creator's featured musical work. Here the distances can be determined in any suitable way, such as by, ranking the distances, comparing the distances to a threshold, and the like.

The project retrieval module 230 can receive the project candidates from the project candidate generation module and provide the content feature vectors of the music project included in the project candidates to the distance module 250.

The distance module 250 can be implemented to determine distances between content feature vectors, such as distances between the audio feature vector for the given music creator's featured musical work and audio feature vectors for the reference music contents of the music projects included in the project candidates, and/or distances between the lyrics feature vector. Hence, the distance module 250 can receive the content feature vector for the given music creator's featured musical work from the content neural network module 220, and the content feature vectors for the project candidates from the project retrieval module 230. The distance module 250 can determine the distances over the content vector space and select music projects with the smallest distances to form the sorted project candidates. According to the sorted project candidates and the recommendation settings configured via the user interface, the distance module 250 can form the final recommendation list. In the example illustrated in Figure 2, the distance module 250 determines the music projects from the project candidates that are closest to the given music creator's featured musical work based on the top-five distances with the smallest values, and then forms the recommendation list using these five music projects.

In an example, the music creator registration can provide multiple featured music works and corresponding tags of musical attributes. The content and tag neural network modules can generate respective content and tag feature vectors. Then the project candidate generation module 240, the project retrieval module 230 and the distance module 250 can use the respective content and tag feature vectors for every one of the multiple featured music works and corresponding tags of musical attributes to return the respective recommendation list of music projects that call for creator collaborations.

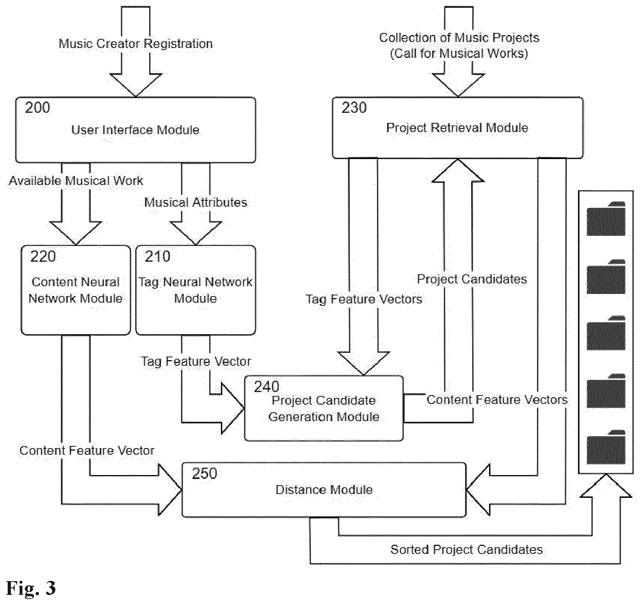

Figure 3 illustrates an example of a music project recommendation system for recommending a list of music projects from a collection of projects that call for musical works to a given music creator's available musical work in accordance with one or more aspects of the disclosure. In this implementation, the system can use the modules presented in Figure 2, including user interface module 200, tag neural network module 210, content neural network module 220, project retrieval module 230, project candidate generation module 240, and the distance module 250.

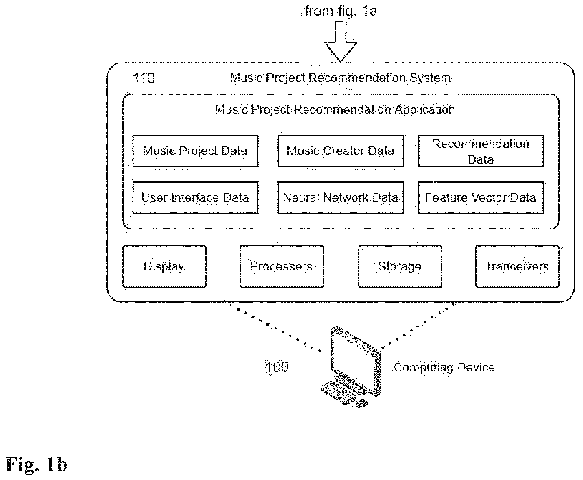

The user interface module 200 can be implemented to generate and display a user interface. The user interface in Figure 1 is an example of a user interface generated by the user interface module 200. The user interface module 200 can receive and display information registered by music creators via the user interface, including available musical works, and corresponding tags of musical attributes.

Referring to the implementation in Figure 2, the tag neural network module 210 can generate a tag feature vector for the text-based tags of musical attributes. The tag neural network module 210 can provide the tag feature vector corresponding to the tags of musical attributes of a music creator's available musical work to the project candidate generation module 240. The content neural network module can be implemented to generate a content feature vector for music related content, such as audio recordings and lyrics documents. The content neural network module can provide the audio feature vector and/or the lyrics feature vector corresponding to the available musical work given in the music creator registration to the distance module 250.

From the database that stores the registered music projects that call for musical works, the project retrieval module can retrieve their corresponding tags of musical attributes and reference music contents to obtain the respective tag feature vectors and content feature vectors, which represent the semantic meanings of tags of musical attributes and reference music contents, respectively. Additionally or alternatively, the musical work retrieval module can obtain these feature vectors by providing the corresponding tags of musical attributes to the tag neural network module 210, and the corresponding reference music contents to the content neural network module, which can then generate tag and content feature vectors that belong to the filtered list of music projects. The project retrieval module can provide the tag feature vectors to the project candidate generation module 240, and the content feature vectors to the distance module 250.

The project candidate generation module 240 can be implemented to determine distances between tag feature vectors, such as distances between the tag feature vector for the tags of musical attributes of a music creator's available musical work, and tag feature vectors for the tags of musical attributes requested in the filtered projects. Hence the project candidate generation module 240 can receive the tag feature vector for the musical attributes of the given music creator's available musical work from the tag neural network module 210, and the tag feature vectors for the filtered projects from the project retrieval module. The project candidate generation can determine the distances over the tag vector space and indicate a list of project candidates, consisting of the music projects that obtain similar musical attributes to the ones presented in the given music creator's available musical work. Here the distances can be determined in any suitable way, such as by, ranking the distances, comparing the distances to a threshold, and the like.

The project retrieval module can receive the project candidates from the project candidate generation module 240 and provide the content feature vectors of the music project included in the project candidates to the distance module 250.

The distance module 250 can be implemented to determine distances between content feature vectors, such as distances between the audio feature vector for the given music creator's available musical work and audio feature vectors for the reference music contents of the music projects included in the project candidates, and/or distances between the lyrics feature vector. Hence, the distance module 250 can receive the content feature vector for the given music creator's available musical work from the content neural network module, and the content feature vectors for the project candidates from the project retrieval module. The distance module 250 can determine the distances over the content vector space and select music projects with the smallest distances to form the sorted project candidates. According to the sorted project candidates and the recommendation settings configured via the user interface, the distance module 250 can form the final recommendation list. In the example illustrated in Figure 3, the distance module 250 determines the music projects from the project candidates that are closest to the given music creator's available musical work based on the top-five distances with the smallest values, and then forms the recommendation list using these five music projects.

In an example, the music creator registration can provide multiple available music works and corresponding tags of musical attributes. The content neural network module 220 and tag neural network modules 210 can generate respective content and tag feature vectors. Then the project candidate generation module 240, the project retrieval module 230 and the distance module 250 can use the respective content and tag feature vectors for every one of the multiple available music works and corresponding tags of musical attributes to return the respective recommendation list of music projects that call for musical works.

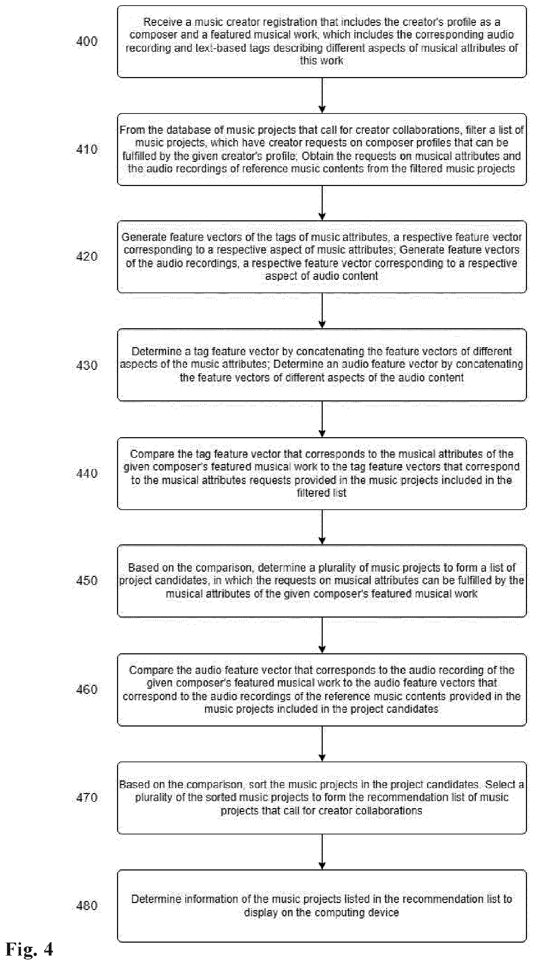

Figure 4 illustrates a flow diagram depicting an example procedure in accordance with the music project recommendation to a music creator who is a composer.

The first step 400 of the procedure is receiving a music creator registration. The registration information includes the creator's profile as a composer and a featured musical work, which includes the corresponding audio recording and text-based tags describing different aspects of musical attributes of this work.

The next step 410 is to filter a list of music projects from the database of music projects that call for creator collaborations. The filtered music projects have creator requests on composer profiles that can be fulfilled by the given creator's profile as a composer. The requests on musical attributes and the audio recordings of reference music contents from the filtered music projects are obtained for the comparison of their feature vectors in the following steps.

In one embodiment, illustrated in step 420, tag feature vectors of the tags of music attributes according to the method described above are generated, where a respective feature vector corresponds to a respective aspect of music attributes. Likewise, audio feature vectors of the audio recordings are generated, where a respective feature vector corresponds to a respective aspect of music content.

In one embodiment, the multiple tag/audio feature vectors of one musical work are concatenated in step 430 to a single tag/audio feature vector representing all characteristics of this musical work.

The next step 440 is to compare the tag feature vector corresponding to the musical attributes of the given composer's featured musical work to the tag feature vectors that correspond to the requests on musical attributes provided in the music projects included in the filtered list.

Based on the comparison, the next step 450 is to determine a plurality of music projects to form a list of project candidates, in which the musical attributes requests can be fulfilled by the musical attributes of the given composer's featured musical work.

In step 460, the audio feature vector that corresponds to the audio recording of the given composer's featured musical work is compared to the audio feature vectors that correspond to the audio recordings of the reference music contents provided in the music projects included in the project candidates. Based on the comparison, music projects in the project candidates are sorted, in step 470, to determine the final recommendation list of music projects that call for creator collaborations.

In the last step 480, information related to the music projects listed in the recommendation list to display on the computing device 100 is determined.

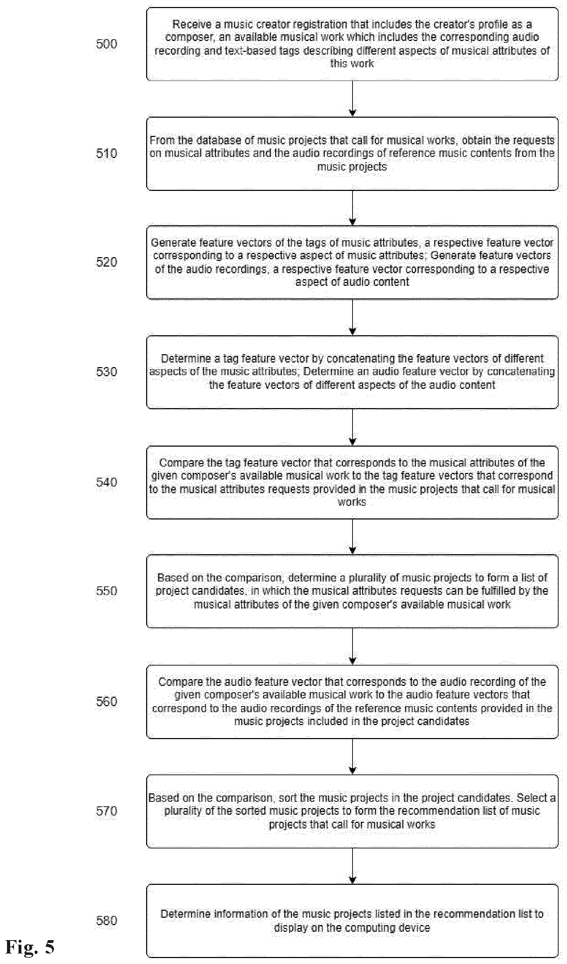

Figure 5 illustrates a flow diagram depicting an example procedure in accordance with the music project recommendation to a musical work created by a composer.

The first step 500 of the procedure is receiving a music creator registration. The registration information includes the creator's profile as a composer and an available musical work to be pitched to potential music projects. The available music work of the given composer includes the corresponding audio recording and text-based tags describing different aspects of musical attributes of this work.

The next step 510 is to obtain the requests on musical attributes and the audio recordings of reference music contents from the database of music projects that call for musical works.

In step 520, tag feature vectors of the tags of music attributes are generated according to the method described above, where a respective feature vector corresponds to a respective aspect of music attributes. Likewise, audio feature vectors of the audio recordings are generated, where a respective feature vector corresponds to a respective aspect of music content.

In one embodiment, illustrated in step 530, the multiple tag/audio feature vectors of one musical work are concatenated to a single tag/audio feature vector representing all characteristics of this musical work.

The next step 540 is to compare the tag feature vector corresponding to the musical attributes of the given composer's available musical work to the tag feature vectors that correspond to the requests on musical attributes provided in the music projects that call for musical works. Based on the comparison, the next step 550 is to determine a plurality of music projects to form a list of project candidates, in which the requests on musical attributes can be fulfilled by the musical attributes of the given composer's available musical work.

In step 560, the audio feature vector that corresponds to the audio recording of the given composer's available musical work is compared to the audio feature vectors that correspond to the audio recordings of the reference music contents provided in the music projects included in the project candidates. Based on the comparison, music projects in the project candidates are sorted in step 570 to determine the final recommendation list of music projects that call for musical works.

In the last step 580, information related to the music projects listed in the recommendation list to be displayed on the computing device 100 is determined.

Aspects of the procedures illustrated in Figure 4 and 5 may be implemented in hardware, firmware, software, or a combination thereof. The procedure is illustrated as a set of blocks that specify operations performed by one or more devices and are not necessarily limited to the orders shown for performing the operations by the respective blocks. The procedure may be performed in a digital medium environment by a suitably configured computing device 100, such as the computing device 100 described with reference to Figures 1a - 1b that makes use of a music project recommendation system, such as the system described with reference to Figure 2 or Figure 3.

A music project recommendation system implementing procedures illustrated in Figure 4 and 5 may be an independent application that has been installed on the computing device 100, a service hosted by a service provider that is accessible by the computing device 100, a plug-in module to the computing device 100, or combinations thereof.

## Claims

1. A method for providing content-based recommendation of music projects, selected from registered music projects, to be recommended to a music creator, where the registered music projects comprise requests on creator profiles that are stored and made available in a project filter module, requests on musical attributes, and reference music contents that are stored and made available in a project retrieval module (230), the method is executed in a music project recommendation system (110) running on a computing device (100), the method comprises:
- receiving, via a user interface module (200), input data of a music creator comprising profile information, and musical works including the corresponding metadata, text-based tags of musical attributes and music contents;
- deriving, in a project filter module (205), a list of projects according to the creator profile;
- deriving, in a project retrieval module (230), the corresponding requests on musical attributes, and reference music contents from the music projects included in the filtered list;
- generating, in a tag neural network module (210), tag feature vectors of the tags of musical attributes of the musical works provided by the music creator and of the requests provided by the music projects included in the filtered list;
- generating, in a content neural network module (220), content feature vectors of the music contents of the musical works provided by the music creator and of the references provided by the music projects included in the filtered list;
- comparing, in a project candidate generation module (240), the generated tag feature vectors of the tags of musical attributes of the musical works provided by the music creator to the generated tag feature vectors of the requested tags of musical attributes of the music projects included in the filtered list;
- deriving a list of project candidates by sorting the compared tag feature vectors according to degree of similarity between tag feature vectors;
- comparing, in a distance module (250), the generated content feature vectors of the music contents of the musical works provided by the music creator to the generated content feature vectors of the reference music contents of the music projects included in the project candidates;
- deriving a list of sorted project candidates according to determined distances, over the content vector space, of the content feature vectors of the reference music contents of the music projects in the list of projects candidates, and,
- presenting, on the user interface (120), a final recommendation list of music projects, consisting of a plurality of music projects included in the list of sorted project candidates, to be recommended to the input music creator.

2. The method according to claim 1, where the user interface module (200) is implemented to generate and display a user interface (120) on the computing device (100).

3. The method according to claim 1 or 2, where the text-based tags of musical attributes are user-generated and/or computer generated by executing an algorithm.

4. The method according to any of the previous claims, where the tag neural network module (210) is adapted to concatenate multiple text feature vectors, each defining different characterising aspects of musical attributes, to a single tag feature vector representing all characteristics.

5. The method according to any of the previous claims, where the content neural network module (220) is adapted to concatenate multiple audio feature vectors, each defining different characterising aspects of the audio, to a single audio feature vector representing all characteristics.

6. The method according to any of the previous claims, where the content neural network module (220) is adapted to generate a single lyrics feature vector representing semantic meanings of a lyrics document.

7. The method according to any of the previous claims, by determining a selection of information characterising the final recommendation list of music projects to display on the computing device (100).

8. A music project recommendation system providing content-based recommendation of music projects, selected from registered music projects, to be recommended to a music creator, where the registered music projects comprise requests on creator profiles that are stored and made available in a project filter module (205), requests on musical attributes and reference music contents that are stored and made available in a project retrieval module (230), the system comprises a computing device (100) adapted for performing the content-based recommendation when executing a music project recommendation program, the system further comprises:
- a user interface module (200) receiving input data of a music creator comprising profile information, and musical works including the corresponding metadata, text-based tags of musical attributes and music contents;
- a tag neural network module (210) generating tag feature vectors of the tags of musical attributes of the musical works provided by the music creator and of the requests provided by the registered music projects;
- a content neural network module (220) generating content feature vectors of the music contents of the musical works provided by the music creator and of the references provided by the registered music projects;
- a project filter module (205) deriving a list of projects according to the creator profile;
- a project retrieval module (230) deriving the corresponding requests on musical attributes, and reference music contents from the music projects included in the filtered list;
- a project candidate generation module (240) comparing the generated tag feature vectors of the tags of musical attributes of the musical works provided by the music creator to the generated tag feature vectors of the requested tags of musical attributes of the music projects included in the filtered list, and deriving a list of project candidates by sorting the compared tag features vectors according to degree of similarity between tag feature vectors;
- a distance module (250) comparing the generated content feature vectors of the music contents of the musical works provided by the music creator to the generated content feature vectors of the reference music contents of the music projects included in the project candidates, and deriving a list of sorted project candidates according to determined distances, over the content vector space, of the content feature vectors of the reference music contents of the music projects in the list of projects candidates, and,
- a user interface (120), presenting a final recommendation list of music projects consisting of a plurality of music projects included in the list of sorted project candidates to be recommended to the input music creator.

9. A computer program product that when executed by a computing device (100) performs the method according to claims 1 to 7 for providing content-based recommendation of music projects, selected from registered music projects, to be recommended to a music creator, where the registered music projects comprise requests on creator profiles that are stored and made available in a project filter module (205), requests on musical attributes, and reference music contents that are stored and made available in a project retrieval module (230).
